# EUROPEAN PATENT APPLICATION

(11) **EP 1 919 207 A2**
(43) Date of publication of application: **07.05.2008**
(21) Application number: 07114455.4
(22) Date of filing: 16.08.2007
(51) Int. Cl.: H04N 5/765

(54) **Method for detecting a digital interface and an image display device adopting the same**

(30) Priority: 03.11.2006 KR 20060108451
(71) Applicant: Samsung Electronics Co., Ltd., Suwon-si, Gyeonggi-do 442-742 (KR)
(72) Inventor: Kang, Ki-taeg, Gyeonggi-do (KR)
(74) Representative: Grootscholten, Johannes A.M.

(57) **Abstract**

A method for detecting a digital interface connected to an external device, and an image display device adopting the same are provided. The method for detecting a digital interface includes generating and displaying a menu (S420) for selecting a method for detecting a connection to an external device through a digital interface if the menu is requested (S410), and detecting connection to the external device through the digital interface according to a digital interface detection method selected from the displayed menu (S430-S460). Accordingly, problems regarding digital interface detection can be prevented.

## Description

### BACKGROUND OF THE INVENTION

### Field of the Invention:

Apparatuses and methods consistent with the present invention relate to detecting a digital interface and an image display device, and more particularly, to detecting a digital interface connected to an external device, and an image display device adopting the same.

### Description of the Related Art:

As digital broadcasting has become common in society, image display devices for displaying digital broadcasting and digital high definition images more vividly have become widespread. The image display devices display digital broadcasting externally received through a set-top box, or display digital high definition images output from a digital versatile disk (DVD) player for playing a DVD storing digital high definition images.

As DVDs are now widely distributed and image display devices are connected to DVD players, digital interfaces are provided for data transfer between DVD players and image display devices.

The digital interfaces include high definition multimedia interfaces (HDMI), which are interfaces to transmit decompressed digital video and audio signals through an HDMI cable. The HDMI provides an interface between multimedia sources, such as set-top boxes supporting the HDMI and DVD players, and image display devices, such as audio visual (AV) devices, monitors, and digital televisions.

Conventional image display devices determine whether there is a connection to a multimedia source through the HDMI by monitoring the voltage of an HDMI terminal. That is, conventional image display devices detect a connection to the multimedia source through the HDMI by monitoring the direct current (DC) level of the HDMI terminal if the voltage is applied from the multimedia source and an HDMI detection signal is received with the voltage. Subsequently, the conventional image display device which has detected that the conventional image display device is connected to the multimedia source through the HDMI outputs a hot plug detection (HPD) signal to the multimedia source. The multimedia source receives the HPD signal, and accordingly detects that the multimedia source is connected to the image display device through the HDMI.

However, the multimedia source detects a hot plug reset duration (HPRD) differently according to the type of multimedia source, or according to the manufacturer of the multimedia source even if it is the same type of multimedia source, so detection errors arise.

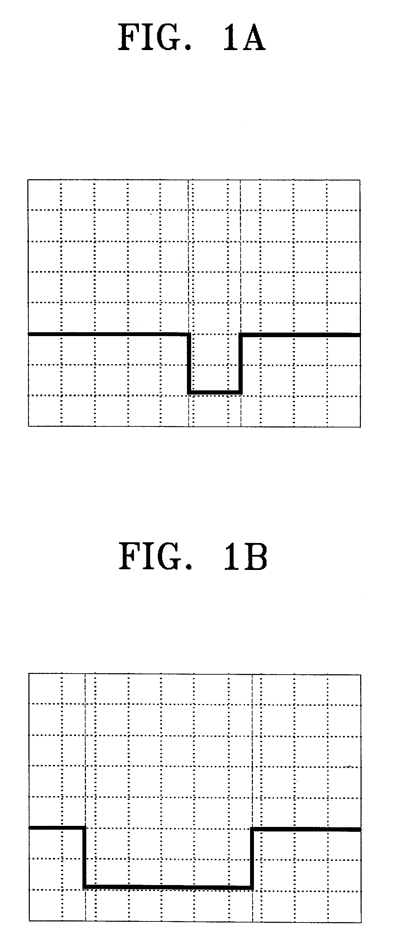

FIGS. 1A and 1B are views showing a conventional method for detecting a digital interface. More specifically, FIGS. 1A and 1B represent the HPRDs of the HPD signal, FIG. 1A showing an HPRD of 322ms, and FIG. 1B an HPRD of 1014ms. Conventional image display devices output HPD signals having a fixed HPRD, so an image display device may output, for example, only an HPD signal having a reset section of 322ms. A multimedia source capable of detecting an HPD signal having a reset section of 322ms receives the HPD signal from the image display device, detects that the multimedia source is connected to the image display device through an HDMI, and then transmits digital images to the image display device. However, a multimedia source capable of detecting an HPD signal having a reset section of 1014ms receives an HPD signal having a reset section of 322ms from the image display device, detects that the multimedia source is not connected to the image display device through an HDMI, and then neither transmits digital images to the image display device nor outputs the voltage. The image display device detects at the beginning of connecting to the HDMI that the image display device is connected to the multimedia source through the HDMI, but if the image display device does not receive the voltage from the multimedia source, the image display device detects that the image display device is not connected to the multimedia source through the HDMI.

As discussed above, conventionally, HPRDs vary according to the type of multimedia source, so if the power is turned on again or the type of multimedia source changes, detection errors arise.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above. An aspect of the present invention is to provide a digital interface detection method capable of selecting a method for detecting a digital interface connected to an external device, and an image display device adopting the same.

In order to achieve the above-described and other aspects of embodiments of the present invention, a method for detecting a digital interface is provided comprising generating and displaying a menu for selecting a method for detecting connection to an external device through a digital interface, if the menu is requested, and detecting a connection to the external device through the digital interface according to a digital interface detection method selected from the displayed menu.

The digital interface detection method may comprise an automatic detection method for automatically detecting connection to the external device through the digital interface, and a compulsory detection method for compulsorily detecting connection to the external device through the digital interface.

In detecting the connection to the external device through the digital interface, connection to the external device through the digital interface may be automatically detected if the selected digital interface detection method is the automatic detection method.

In detecting the connection to the external device through the digital interface, connection to the external device through the digital interface may be compulsorily detected if the selected digital interface detection method is the compulsory detection method.

The digital interface may comprise a high definition multimedia interface (HDMI).

The menu for selecting the digital interface detection method may be at least one of a factory menu and a user menu.

According to an embodiment of the present invention, an image display device comprises a graphic user interface (GUI) which generates a menu for selecting a method for detecting connection to an external device through a digital interface, if the menu is requested, and a controller which detects a connection to the external device through the digital interface according to a digital interface detection method selected from the displayed menu.

The digital interface detection method may comprise an automatic detection method for automatically detecting a connection to the external device through the digital interface, and a compulsory detection method for compulsorily detecting a connection to the external device through the digital interface.

The controller may automatically detect a connection to the external device through the digital interface if the selected digital interface detection method is the automatic detection method.

The controller compulsorily may detect connection to the external device through the digital interface if the selected digital interface detection method is the compulsory detection method.

The digital interface may comprise a high definition multimedia interface (HDMI).

The menu for selecting the digital interface detection method may be at least one of a factory menu and a user menu.

The image display device may further comprise a hot plug detector (HPD) which senses a connection to the external device through the external device, wherein the controller detects that the image display device is connected to the external device through the digital interface, if the HPD senses that the image display device is connected to the external device through the digital interface.

The image display device may further comprise a receiver which receives digital image data from the external device, and an image processor which processes and displays the received digital image data, wherein the controller operates the image processor to process and display the received digital image data at a high definition, if the controller detects that the image display device is connected to the external device through the digital interface.

According to an embodiment of the present invention, a method for detecting a digital interface comprises determining a method for detecting a connection to an external device through a digital interface of a high definition multimedia interface (HDMI), and detecting that the external device is connected through the digital interface, if the digital interface detection method is a compulsory detection method.

According to an embodiment of the present invention, a method for detecting a digital interface comprises detecting that an external device is connected through a digital interface of a high definition multimedia interface (HDMI), and subsequently determining whether a digital interface detection signal is received from the external device, displaying one of a message for indicating a digital interface connection anomaly and a message for asking whether to select a digital interface compulsory detection method, if it is determined that the digital interface detection signal is not received from the external device, and detecting that the external device is connected through the digital interface if it is determined that the digital interface compulsory detection method is selected.

### BRIEF DESCRIPTION OF THE DRAWINGS

The above aspects and features of the present invention will be more apparent by describing certain exemplary embodiments of the present invention with reference to the accompanying drawings, in which:
FIG. 1A is a view showing a conventional method for detecting a digital interface;
FIG. 1B is another view showing a conventional method for detecting a digital interface;
FIG. 2 is a block diagram illustrating the configuration of a system comprising an image display device connected to an external device through a digital interface according to an exemplary embodiment of the present invention; FIG. 3A illustrates a menu provided according to a method of detecting a digital interface of an image display device according to an exemplary embodiment of the present invention;
FIG. 3B illustrates a menu provided according to a method of detecting a digital interface of an image display device according to another exemplary embodiment of the present invention;
FIG. 4 is a flow chart describing a method of detecting a digital interface of an image display device according to an exemplary embodiment of the present invention; and
FIG. 5 is a flow chart describing a method of detecting a digital interface of an image display device according to another exemplary embodiment of the present invention.

### DETAILED DESCRIPTION OF EXEMPLARY EMBODIMENTS OF THE PRESENT INVENTION

Exemplary embodiments of the present invention will be described in detail with reference to the annexed drawings. In the drawings, the same elements are denoted by the same reference numerals throughout. In the following description, detailed descriptions of known functions and configurations incorporated herein have been omitted for conciseness and clarity.

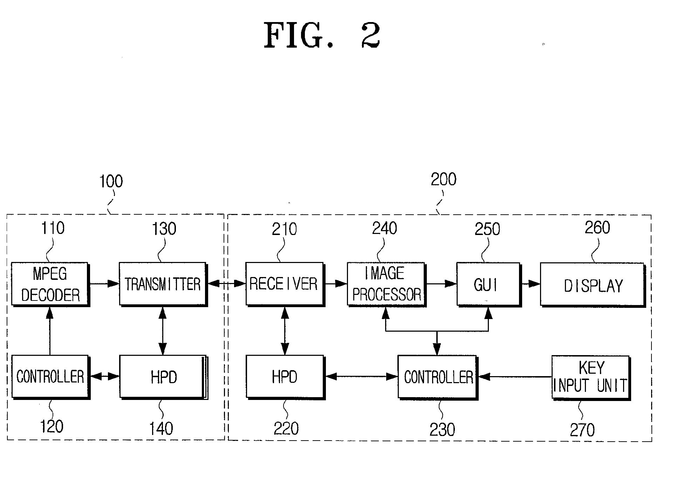

FIG. 2 is a block diagram illustrating the configuration of a system comprising an image display device connected to an external device through a digital interface according to an exemplary embodiment of the present invention.

The image display device 200 is connected to a DVD player 100, shown as an example of an external device, through a digital interface, that is, an HDMI, and displays a digital high definition image transmitted from the DVD player 100 through the HDMI. The image display device 200 provides a menu for selecting a method for detecting whether or not the image display device 200 is connected to the DVD player 100 through the HDMI.

With reference to FIG. 2, the DVD player 100 outputs decompressed digital high definition images to the image display device 200 through the HDMI, and includes a Moving Picture Experts Group (MPEG) decoder 110, a controller 120, a transmitter 130, and a hot plug detector (HPD) 140.

The MPEG decoder 110 decompresses an MPEG-2 bit stream written on the DVD (not shown) and decodes digital high definition image data. The controller 120 applies the voltage to the image display device 200 through the transmitter 130 if a power-on signal is input from the image display device 200 through the transmitter 130.

Moreover, the controller 120 operates the HPD 140 to sense a hot plug detection (HPD) signal input from the image display device 200 through the transmitter 130. If the controller 120 receives a low signal from the HPD 140, the controller determines that the DVD player 100 is not connected to the image display device 200 through the transmitter 130, then operates the transmitter 130 not to output the digital high definition image data decoded by the MPEG decoder 110 to the image display device 200, and does not apply the voltage to the image display device 200.

The image display device 200 connected to the DVD player 100 displays the digital high definition image data output from the DVD player 100, and includes a receiver 210, a hot plug detector (HPD) 220, a controller 230, an image processor 240, a graphic user interface (GUI) 250, a display 260, and a key input unit 270.

The receiver 210 includes an HDMI terminal, and receives the voltage and digital high definition image data output from the transmitter 130 of the DVD player 100. The HPD 220 senses whether the image display device 200 is connected to the DVD player 100 through the HDMI terminal of the receiver 210. That is, the HPD 220 senses that the image display device 200 is connected to the DVD player 100 through the HDMI if the HPD 220 receives an HDMI detection signal with the voltage through the HDMI terminal of the receiver 210.

If the HPD 220 senses that the image display device 200 is connected to the DVD player 100 through the HDMI, the controller 230 detects that the HDMI terminal of the receiver 210 is connected to the DVD player 100. That is, the controller 230 detects that the image display device 200 is connected to the DVD player 100 through the HDMI.

Subsequently, the controller 230 operates the HPD 220 to output an HPD signal through the receiver 210 to the DVD player 100.

If the digital high definition image data are received from the DVD player 100 through the HDMI terminal of the receiver 210, the controller 230 operates the image processor 240 to process the received digital high definition image data in an HDMI mode. The HDMI mode is a mode to display a digital high definition image more vividly.

The image processor 240 accordingly processes the received digital high definition image data in the HDMI mode and displays digital high definition images corresponding to the digital high definition image data on the display 260.

The GUI 250 generates and displays a factory menu or a user menu on the display 260. The key input unit 270 is provided with a key for requesting the factory menu or user menu, and is also provided with a key for selecting the HDMI detection method in the factory menu or user menu displayed by the GUI 250.

If a signal for requesting the factory menu or user menu is input through the key input unit 270, the controller 230 operates the GUI 250 to generate and display the factory menu or user menu on the display 260.

If a signal for selecting the HDMI detection method is input through the key input unit 270, the controller 230 detects connection to the DVD player 100 through the HDMI in the HDMI detection method corresponding to the signal.

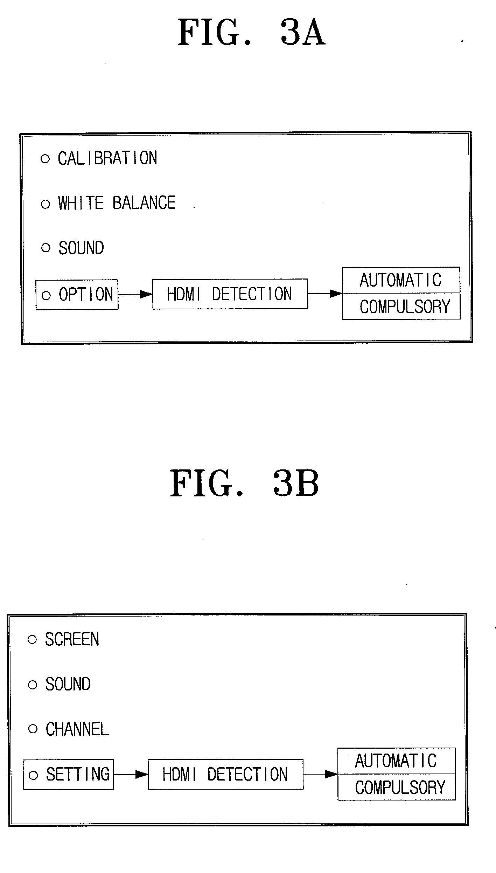

FIG. 3A illustrates a menu provided according to a method of detecting a digital interface of an image display device according to an exemplary embodiment of the present invention.

FIG. 3A includes a factory menu for selecting the HDMI detection method in a factory mode. The factory mode is a mode for adjusting general product specifications and testing, and may be too technical for a user to use. The factory menu provides detailed menus to manage product specifications and testing in the factory mode. For example, the factory menu includes detailed menus, such as a calibration menu, a white balance menu, a sound menu, and an option menu. The option menu includes an HDMI detection menu as a sub-menu. The HDMI detection menu is a menu for selecting the HDMI detection method.

An HDMI automatic detection method or an HDMI compulsory detection method can be selected from the HDMI detection menu. The HDMI automatic detection method is the HDMI detection method described above, and the HDMI compulsory detection method is a method for compulsorily detecting the HDMI.

Detection errors caused by the HDMI automatic detection method can be prevented in advance by using the HDMI compulsory detection method.

The HDMI detection menu has been described as being included in a sub-menu of the option menu, but it may also be one of the main menus along with the calibration menu, and sound menu.

FIG. 3B illustrates a menu provided according to a method of detecting a digital interface of an image display device according to another exemplary embodiment of the present invention.

FIG. 3B includes a user menu for selecting the HDMI detection method in a user mode. The user mode is a mode in which a user can easily adjust the settings, and the user menu provides detailed menus to be set by a user.

For example, the user menu includes detailed menus such as a screen menu, a sound menu, a channel menu, and a setting menu. The setting menu includes an HDMI detection menu as a sub-menu. An HDMI automatic detection method or an HDMI compulsory detection method can be selected from the HDMI detection menu, as described in the HDMI detection menu of the factory mode.

The HDMI detection menu has been described as being included in a sub-menu of the setting menu, but it may also be one of the detailed menus such as the screen menu, and sound menu.

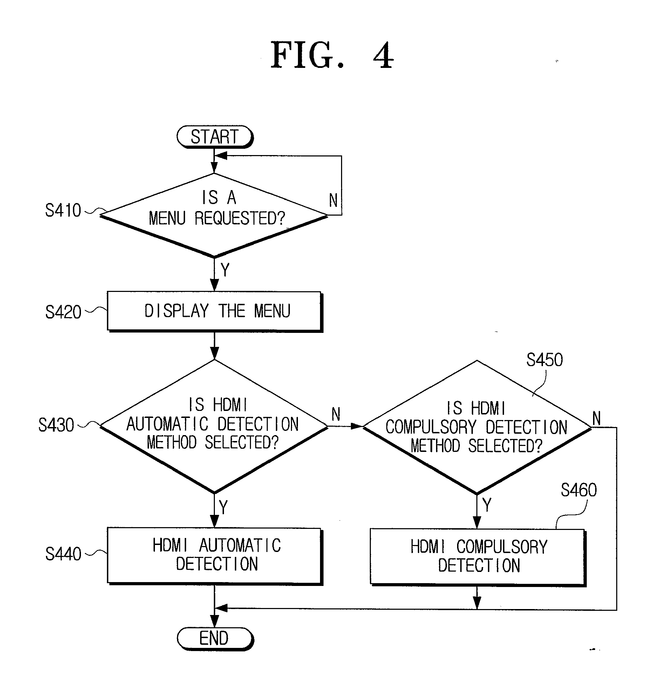

FIG. 4 is a flow chart describing a method of detecting a digital interface by an image display device according to an exemplary embodiment of the present invention.

With reference to FIG. 4, the controller 230 determines whether a menu is requested, in operation 410. More specifically, if the controller 230 receives a signal for requesting one of the factory menu and user menu through the key input unit 270, the controller 230 determines that a menu is requested. In general, the factory menu can be used only in the factory mode, but can also be requested through a factory menu key separately provided on the key input unit 270 or by pressing a key for requesting the user menu twice in succession.

If it is determined that a menu is requested, the controller 230 operates the GUI 250 to generate and display the menu in operation 420. The GUI 250 is responsive to the controller 230 to generate and display the factory menu on the display 260 if the factory menu is requested, or to generate and display the user menu on the display 260 if the user menu is requested.

The controller 230 determines whether the HDMI automatic detection method is selected in operation 430. More specifically, if "automatic" is selected from the HDMI menu included in the factory menu or user menu using the key input unit 270, the controller 230 determines that the HDMI automatic detection is selected.

If it is determined that the HDMI automatic detection method is selected, the controller 230 automatically detects the connection to the DVD player 100 through the HDMI in operation 440. That is, the HPD 220 senses that the image display device 200 is connected to the DVD player 100 through the HDMI if the HPD 220 receives an HDMI detection signal by the voltage through the HDMI terminal of the receiver 210. Consequently, the controller 230 detects that the image display device 200 is connected to the DVD player 100 through the HDMI.

Alternatively, the HPD 220 senses that the image display device 200 is not connected to the DVD player 100 through the HDMI if the HPD 220 does not receive an HDMI detection signal with the voltage through the HDMI terminal of the receiver 210. Consequently, the controller 230 detects that the image display device 200 is not connected to the DVD player 100 through the HDMI.

If it is determined that the HDMI automatic detection method is not selected, the controller 230 determines whether the HDMI compulsory detection method is selected in operation 450. More specifically, if "compulsory" is selected from the HDMI menu included in the factory menu or user menu using the key input unit 270, the controller 230 determines that the HDMI automatic detection is selected.

If it is determined that the HDMI compulsory detection method is selected, the controller 230 compulsorily detects the connection to the DVD player 100 through the HDMI in operation 460. More specifically, if the HDMI compulsory detection method is selected, the controller 230 always detects that the image display device 200 is connected to the DVD player 100 through the HDMI, regardless of whether or not the HPD 220 senses. If the controller 230 detects that the image display device 200 is connected to the DVD player 100 through the HDMI, the controller 230 operates the image processor 240 to process the digital high definition image data received through the receiver 210 in the HDMI mode. Therefore, if the HDMI compulsory detection method is selected, a user can always view digital high definition images.

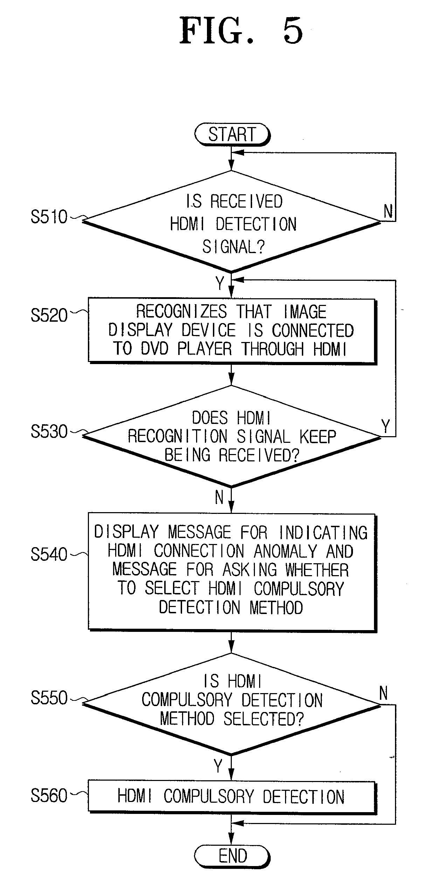

FIG. 5 is a flow chart describing a method of detecting a digital interface of an image display device according to another exemplary embodiment of the present invention.

With reference to FIG. 5, the controller 230 detects whether the HPD 220 receives an HDMI detection signal with the voltage through the HDMI terminal of the receiver 210, in operation 510.

If it is determined that the HPD 220 receives the HDMI detection signal, the HPD 220 senses that the image display device 200 is connected to the DVD player 100 through the HDMI. Consequently, the controller 230 detects that the image display device 200 is connected to the DVD player 100 through the HDMI, in operation 520.

Subsequently, the controller 230 outputs an HPD signal to the DVD player 100, and then determines whether the HPD 220 keeps receiving the HDMI detection signal through the HDMI terminal of the receiver 210, in operation 530.

If it is determined that the HPD 220 does not keep receiving the HDMI detection signal through the HDMI terminal of the receiver 210, the controller 230 operates the GUI 250 to generate and display a message for indicating an HDMI connection anomaly and a message for asking whether to select the HDMI compulsory detection method, in operation 540.

Subsequently, the controller 230 determines whether the HDMI compulsory detection method is selected, in operation 550. If it is determined that the HDMI compulsory detection method is selected, the controller 230 compulsorily detects whether the image display device 200 is connected to the DVD player 100 through the HDMI, in operation 560.

As can be appreciated from the above description, detection errors can be prevented.

The foregoing exemplary embodiment and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A method for detecting a digital interface, the method comprising:
generating and displaying a menu showing operations for detecting a connection to an external device through a digital interface, if the menu is requested;
selecting one of operations for detecting the connection to the external device; and
detecting the connection to the external device through the digital interface according to the selected operation for detecting the connection.

2. The method of claim 1, wherein the operations for detecting the connection comprise:
a first operation for automatically detecting the connection to the external device through the digital interface; and
a second operation for compulsorily detecting the connection to the external device through the digital interface.

3. The method of claim 2, wherein in the detecting the connection to the external device through the digital interface, the connection to the external device through the digital interface is automatically detected if the selected operation for detecting the connection is the first operation for automatically detecting the connection.

4. The method of claim 2, wherein in the detecting the connection to the external device through the digital interface, the connection to the external device through the digital interface is compulsorily detected if the selected operation for detecting the connection is the second operation for compulsorily detecting the connection.

5. The method of claim 1, wherein the digital interface comprises a high definition multimedia interface (HDMI).

6. The method of claim 1, wherein the menu showing the operations for detecting the connection comprises at least one of a factory menu and a user menu.

7. An image display device, comprising:
a graphic user interface (GUI) which generates a menu for selecting one of operations for detecting a connection to an external device through a digital interface, if the menu is requested; and
a controller which detects the connection to the external device through the digital interface according to the selected operation from the displayed menu.

8. The image display device of claim 7, wherein the operations for detecting the connection comprise:
a first operation for automatically detecting the connection to the external device through the digital interface; and
a second operation for compulsorily detecting the connection to the external device through the digital interface.

9. The image display device of claim 8, wherein the controller automatically detects the connection to the external device through the digital interface if the selected operation for detecting the connection is the first operation for automatically detecting the connection.

10. The image display device of claim 8, wherein the controller compulsorily detects the connection to the external device through the digital interface if the selected operation for detecting the connection is the second operation for automatically detecting the connection.

11. The image display device of claim 7, wherein the digital interface comprises a high definition multimedia interface (HDMI).

12. The image display device of claim 7, wherein the menu for selecting one of operations for detecting the connection is at least one of a factory menu and a user menu.

13. The image display device of claim 9, further comprising:
a hot plug detector (HPD) which senses the connection to the external device,
wherein the controller detects that the image display device is connected to the external device through the digital interface, if the HPD senses that the image display device is connected to the external device through the digital interface.

14. The image display device of claim 7, further comprising:
a receiver which receives digital image data from the external device; and
an image processor which processes and displays the received digital image data,
wherein the controller operates the image processor to process and display the received digital image data at a high definition, if the controller detects that the image display device is connected to the external device through the digital interface.

15. A method for detecting a digital interface, the method comprising:
determining an operation for detecting a connection to an external device through a digital interface of a high definition multimedia interface (HDMI); and
detecting that the external device is connected through the digital interface, if the operation for detecting the connection is a compulsory detection method.

16. A method for detecting a digital interface, the method comprising:
detecting that an external device is connected through a digital interface, and subsequently determining whether a digital interface detection signal is received from the external device;
displaying one of a message for indicating an digital interface connection anomaly and a message for asking whether to select a digital interface compulsory detection method, if it is determined that the digital interface detection signal is not received from the external device; and
detecting that the external device is connected through the digital interface if it is determined that the digital interface compulsory detection method is selected.
